(19) Europäisches Patentamt
European Patent Office
Office européen des brevets

(11) **EP 1 206 083 B1**

(12) **EUROPÄISCHE PATENTSCHRIFT**

(45) Veröffentlichungstag und Bekanntmachung des Hinweises auf die Patenterteilung:
**10.01.2007   Patentblatt 2007/02**

(51) Int Cl.:
*H04L 12/56* (2006.01)          *H04Q 7/38* (2006.01)

(21) Anmeldenummer: **01000619.5**

(22) Anmeldetag: **12.11.2001**

(54) **Drahtloses Netzwerk und zugeordnete Apparate für eine Auswahl von Transport-Format-Kombinationen**

Wireless network and associated apparatus for a selection of transport format combinations

Réseau sans fil et dispositifs associés pour la sélection des combinaisons de format de transport

(84) Benannte Vertragsstaaten:
**DE FR GB IT**

(30) Priorität: **14.11.2000   DE 10056360**
**21.12.2000   DE 10064379**

(43) Veröffentlichungstag der Anmeldung:
**15.05.2002   Patentblatt 2002/20**

(73) Patentinhaber:
• **Philips Intellectual Property & Standards GmbH**
**20099 Hamburg (DE)**
• **Koninklijke Philips Electronics N.V.**
**5621 BA  Eindhoven (NL)**

(72) Erfinder:
• **Herrmann, Christoph**
**52064, Aachen (DE)**
• **Wasel, Josef**
**52064, Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
**WO-A-00/28760          WO-A-96/10305**

• **"Universal Mobile Telecommunication System (UMTS);Radio Interface Protocol Architecture (3GPP TS 25.301 version 3.6.0 Release 1999)" ETSI TS 125 301 V3.6.0, XX, XX, September 2000 (2000-09), Seiten 1-46, XP002197662**

# EP 1 206 083 B1

**Beschreibung**

Die Erfindung bezieht sich auf ein drahtloses Netzwerk mit einer Funknetzwerk-Steuerung und mehreren zugeordneten Terminals.

Aus 3rd Generation Partnership Project (3GPP); Technical Specification Group (TSG) RAN; Working Group 2 (WG2); Radio Interface Protocol Architecture; TS 25.302 V3.6.O) ist ein drahtloses Netzwerk bekannt, welches die Funktion der MAC-Schicht (MAC = Medium Access Control) beschreibt. Die in der RLC-Schicht (RLC = Radio Link Control) gebildeten Paketeinheiten werden von der MAC-Schicht in Transportblöcke verpackt, die von der physikalischen Schicht über physikalische Kanäle von der Funknetzwerk-Steuerung zu einem Terminal oder umgekehrt übertragen werden. Außer einer solchen Multiplex- bzw. Demultiplex-Funktion hat die MAC-Schicht die Funktion, geeignete Transport-Format-Kombinattonen (Transport Format Combination = TFC) auszuwählen. Eine Transport-Format-Kombination stellt eine Kombination von Transport-Formaten für jeden Transportkanal dar. Die Transport-Format-Kombination beschreibt u.a. wie die Transportkanäle in der physikalischen Schicht in einen physikalischen Kanal gemultiplext werden.

Ferner sind noch aus "Universal Mobile Telecommunication System (UMTS); Radio Interface Protocol Architecture (3GPP TS 25-301 Version 3.6.0 Release 1999)" ETSI TS 125 301 V3.6.0, XX, XX, September 2000 (2000-09), Seiten 1 - 46, und aus WO 00/28760 A1 ein drahtloses Netzwerk bekannt, das den Selektionsprozess für die Findung einer geeigneten Transport-Format-Kombination beschreibt.

Der Erfindung liegt die Aufgabe zugrunde, ein drahtloses Netzwerk zu schaffen, welches einen Selektionsprozess für die Findung einer geeigneten Transport-Format-Kombination angibt, die dann die Übertragung von Transportblöcken bestimmt.

Die Aufgabe wird durch die Merkmale der unabhängigen Ansprüche gelöst.

Insbesondere wird die Aufgabe durch ein drahtloses Netzwerk mit einer Funknetzwerk-Steuerung und mehreren zugeordneten Terminals gelöst,

- die jeweils zur Übertragung von aus Paketeinheiten eines logischen Kanals gebildeten Transportblöcken auf einem Transportkanal vorgesehen sind, dem ein Übertragungszeitintervall aus wenigstens einem Funkrahmen zugeordnet ist und der aktiv ist, wenn der Beginn seines Übertragungszeitintervalls und eines Funkrahmens übereinstimmen,
- wobei die Terminals zu Beginn eines jeden Funkrahmens die aktiven logischen Kanäle für jeden Funkrahmen nach den höchsten Prioritäten zwischen einer Radio Link Control Schicht, im Folgenden RLC-Schicht, und der Medium Access Control-Schicht, im folgenden MAC-Schicht sortieren, und
- die Terminals für jeden der bestehenden logischen Kanäle nacheinander, beginnend mit dem logischen Kanal mit der höchsten Priorität, alle diejenigen Transport-Format-Kombinationen auswählen, welche mindestens M+N Transportblöcke zu übertragen erlauben, wobei M die Anzahl von bereits zugewiesenen Transportblöcken höher priorisierter logischer Kanäle ist, die auch auf den zugehörigen Transportkanal abgebildet sind und N die höchste Anzahl der verfügbaren Paketeinheiten des jeweils betrachteten logischen Kanals ist, die dem zugehörigen Transportkanal zuweisbar sind, ohne dass Transportblöcke des zugehörigen Transportkanals ungenutzt bleiben, wobei eine Transport-Format-Kombination die zur Übertragung vorgesehenen Transportblöcke auf jedem Transportkanal angibt, wobei die Funknetzwerk-Steuerung oder ein Terminal zur Selektion derjenigen Transport-Format-Kombination aus der reduzierten Anzahl der Transport-Format-Kombinationen vorgesehen ist, welche die niedrigste Anzahl von Transportblöcken enthält, wobei keine Änderung der in einem vorhergehenden Funkrahmen erfolgten Zuweisung der inaktiven Transportkanälevorgesehen ist.

Die Erfindung schlägt einen Selektionsprozess für die Findung einer geeigneten Transport-Format-Kombination vor, bei dem zuerst diejenigen Transport-Format-Kombinationen in einer Rekursions-Prozedur ausgewählt werden, welche für die Übertragung der für die verschiedenen Transportkanäle vorgesehenen Transportblöcke geeignet sind. Hierbei ist das Kriterium, dass diejenigen Transport-Format-Kombinationen ausgewählt werden, welche unter Berücksichtigung von gespeicherten Paketeinheiten von schon betrachteten und auf denselben Transportkanal abgebildeten logischen Kanälen die höchste oder mehr als die höchste Anzahl von verfügbaren Paketeinheiten zu übertragen erlauben. Das zweite Kriterium ist dann die Wahl einer solchen Transport-Format-Kombination aus der nach dem ersten Kriterium reduzierten Anzahl, welche die Übertragung der niedrigsten Gesamtanzahl von Transportblöcken ermöglicht. Es ist dabei zu berücksichtigen, dass für inaktive Transportkanäle keine Zuweisung erfolgen kann. Es ist dann die schon zuvor ausgewählte Anzahl von Transportblöcken zu wählen.

Ein eine unterschiedliche Priorität aufweisender logischer Kanal ist auf genau einen Transportkanal abgebildet. Die Funknetzwerk-Steuerung oder ein Terminal führen die Auswahl einer Anzahl von Transport-Format-Kombination in der Reihenfolge der Priorität der logischen Kanäle durch. Die Funknetzwerk-Steuerung oder ein Terminal sortieren die logischen Kanäle zu Beginn der Übertragung nach den Prioritäten der bei gleicher Priorität der logischen Kanäle nach der Länge eines zugrundeliegenden Übertragungszeitintervalls, Zu Beginn jedes Funkrahmens wird dann noch nach der Anzahl der in den Warteschlangen der logischen Kanäle wartenden Blöcke ohne Berücksichtigung der Dauer des Übertragungzeitintervalls sortiert.

Die MAC-Schicht (MAC = Medium Access Control) einer Funknetzwerk-Steuerung oder eines Terminals ist zur Auswahl einer Transport-Format-Kombination und eine RLC-Schicht (RLC = Radio Link Control) der Funknetzwerk-Steuerung oder eines Terminals zur Speicherung von zur Übertragung vorgesehenen Paketeinheiten vorgesehen. Die MAC-Schicht bildet dabei einen Transportblock aus einer über einen logischen Kanal gelieferten Paketeinheit.

Die Erfindung bezieht sich auch auf eine Funknetzwerk-Steuerung und ein Terminal in dem drahtlosen Netzwerk.

Ausfuhrungsbeispiele der Erfindung Werden nachstehend anhand der Fig näher erläutert. Es zeigen:

Fig. 1         ein drahtloses Netzwerk mit einer Funknetzwerk-Steuerung und mehreren Terminals,

Fig. 2         ein Schichtenmodell zur Erläuterung verschiedener Funktionen eines Terminals oder einer Funknetzwerk-Steuerung und

Fig. 3 bis 5   verschiedene Listen zur Erläuterung des erfindungsgemäßen Sortierschemas.

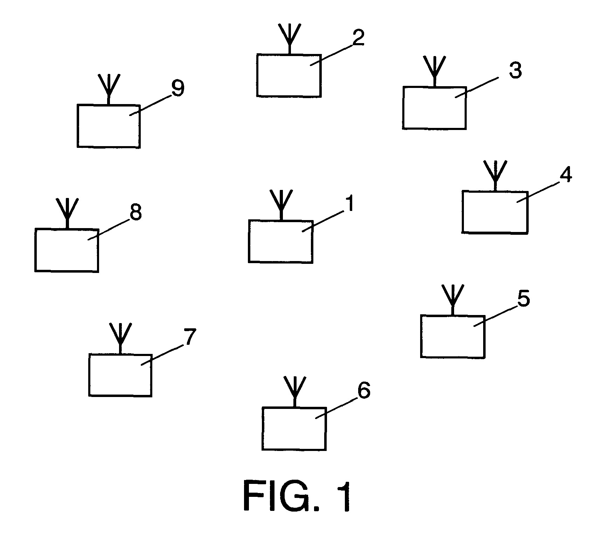

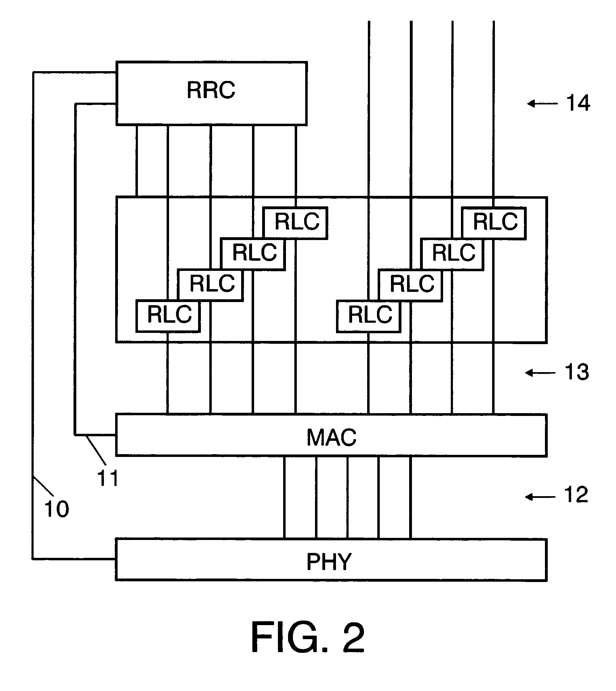

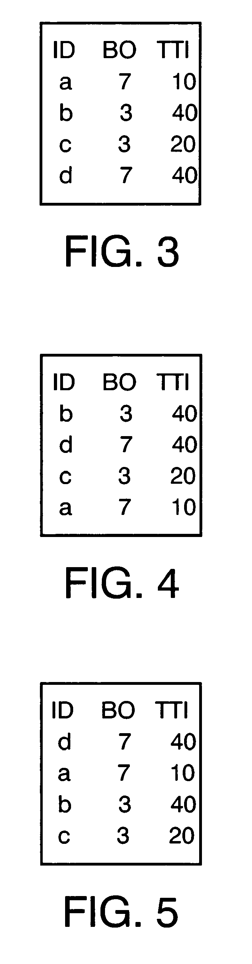

In Fig 1 ist ein drahtloses Netzwerk, zB. Funknetzwerk, mit einer Funknetzverk-Steuerung (Radio Network Controller = RNC) 1 und mehreren Terminals 2 bis 9 dargestellt. Die Funknetzwerk-Steuerung 1 ist für Steuerung aller am Funkverkehr beteiligten Komponenten verantwortlich wie zB. der Terminals 2 bis 9. Ein Steuer- und Nutzdatenaustausch findet zumindest zwischen der Funknetzwer-Steuerung 1 und den Terminals 2 bis 9 statt. Die Funknetzwerk-Steuerung 1 baut jeweils eine Verbindung zur Übertragung von Nutzdaten auf.

In der Regel sind die Terminals 2 bis 9 Mobilstationen und die Funknetzwerk-Steuerung 1 ist fest installiert. Eine Funknetzwerk-Steuerung 1 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA= code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_C$ bezeichnet. $1/T_C$ ist die Chiprate. Die Multiplikation bzw. Modulation des Datensignals mit dem pseudo-zufälligen Rechtecksignal hat eine Spreizung des Spektrums um den Spreizungsfaktor $N_C = T/T_C$ zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung 1 werden über von der Funknetzwer-Steuerung 1 vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Funknetzwerk-Steuerung 1 zu den Terminals 2 bis 9 wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet.

Beispielsweise kann ein Downlink-Steuerkanal vorgesehen sein, der benutzt wird, um von der Funknetzwerk-Steuerung 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal 2 bis 9 zur Funknetzwerk-Steuerung 1 kann beispielsweise ein von der Funknetzwerk-Steuerung 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-kanal (common uplink channel) bezeichnet. Nach einem Verbindungsaufbau zB. zwischen einem Terminal 2 bis 9 und der Funknetzwerk-Steuerung 1 werden Nutzdaten über einen Downlink- und einen Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Damit Nutzdaten zwischen der Funknetzwerk-Steuerung 1 und einem Terminal ausgetauscht werden können, ist es erforderlich, dass ein Terminal 2 bis 9 mit der Funknetzwerk-Steuerung 1 synchronisiert wird. Beispielsweise ist aus dem GSM-System (GSM = Global System for Mobile communication) bekannt, in welchem eine Kombination aus FDMA- und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisition), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden.

Der Steuer- und Nutzdatenaustausch über die Funkschnittstelle zwischen der Funknetzwerk-Steuerung 1 und den Terminals 2 bis 9 kann mit dem in Fig 2 dargestellten, beispielhaften Schichtenmodell oder Protokollarchitektur (vgl. zB. 3rd Generation Partnership Project (3GPP); Technical Specification Group (TSG) RAN; Working Group 2 (WG2); Radio Interface Protocol Architecture; TS 25.301 V3.6.0) erläutert werden. Das Schichtenmodell besteht aus drei Protokollschichten: der physikalischen Schicht PHY, der DatenveibindungBchicht mit den Unterschichten MAC und RLC (in Fig 2 sind mehrere Ausprägungen der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig Die Schicht RRC ist für die Signalisierung zwischen den Terminals 2 bis 9 und der Funknetzwerk-Steuerung 1 verantwortlich. Die Unterschicht RLC dient zur Steuerung einer Funkverbindung zwischen einem Terminal 2 bis 9 und der Funknetzwerk-Steuerung 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportkanäle bzw. Transportverbindungen 12 an. Die MAC-Schicht stellt der RLC-Schicht logische Kanäle bzw. logische Verbindungen 13 zur Verfügung Die RLC-Schicht ist über Zugangspunkte 14 von Applikationen erreichbar.

In der RLC-Schicht werden Paketeinheiten gebildet und in der MAC-Schicht in Transportblöcke verpackt, die von der physikalischen Schicht über physikalische Kanäle von der Funknetzwerk-Steuerung zu einem Terminal oder umgekehrt übertragen \\erden. Außer einer solchen Multiplex- bzw. Demultiplex-Funktion hat die MAC-Schicht die Funktion, geeignete Transport-Format-Kombinationen (Transport Format Combination = TFC) auszuwählen. Eine Transport-Format-Kombination stellt eine Kombination von Transport-Formaten für jeden Transportkanal dar. Die Transport-Format-Kombination beschreibt u.a. wie die Transportkanäle in der physikalischen Schicht in einen physikalischen Kanal gemultiplext (Zeitmultiplex) werden.

Jedes Transport-Format weist einen dynamischen und einem semi-statischen Teil auf. Der dynamische Teil beschreibt eine Transportblockmenge (Transport Block Set = TBS), die während eines Übertragungszeitintervalls (Transmission Time Interval = TTI) in einem Transportkanal übertragen wird, und der semi-statische Teil beinhaltet beispielsweise Informationen über die Art der fehlerkorrigierenden Codierung. Der semi-statische Teil ändert sich nur durch eine Rekonfigurierung des physikalischen Kanals. Eine Transportblockrrenge ist als eine Menge von Transportblöcken definiert, welche zwischen der physikalischen Schicht und der MAC-Schicht ausgetauscht werden. Die Größe eines Transportblocks ist durch die Anzahl von Bits einer Paketeinheit der RLC-Schicht und der Anzahl von Bits von hinzugefügten Steuerinformationen (Header) der MAC-Schicht bestimmt.

Im folgenden wird unter dem Transport-Format nur der dynamische Teil des Transport-Formates verstanden.

Ein Übertragungszeitintervall entspricht einer Anzahl von Funkrahmen (RF) und beträgt mindestens einen Funkrahmen. Es gibt die Anzahl der Funkrahmen an, über die sich das Interleaving erstreckt. Beim Interleaving handelt es sich um ein sendeseitiges, zeitliches Verschachteln von Informationseinheiten (Symbolen) aus aufeinanderfolgenden Funkrahmen, Die MAC-Schicht liefert eine Transportblockmenge während jedes Übertragungszeitintervalls zur physikalischen Schicht. Das Übertragungszeitintervall ist für einen Transportkanal spezifisch und gehört zum semi-statischen Teil des Transport-Formates. Empfängt die physikalische Schicht zu Beginn eines Übertragungszeitintervalls, das n Funkrahmen umfasst, von der MAC-Schicht eine Transportblockmenge, die zur Übertragung auf einem Transportkanal bestimmt ist, so wird jeder Transportblock dieser Menge in n Segmente zerlegt (Segmentierung von Transportblöcken). Die n Segmente jedes Transportblockes werden in den n aufeinanderfolgenden Funkrahmen des Übertragungszeitintervalls übertragen. Dabei weisen alle n Funkrahmen des Übertragungszeitintervalls dieselbe Reihenfolge der Segmente auf.

Die MAC-Schicht dient dazu, das geeignete Transport-Format für jeden Transportkanal auszuwählen. Bei dieser Auswahl müssen die Prioritäten der logischen Kanäle zwischen RLC-und MAC-Schicht, die im folgenden MAC-Priorität (MAC Logical Priority = MLP) genannt wird, die Belegung der Warteschlangen in der RLC-Schicht (Buffer Occupancies = BO), die Übertragungszeitintervalle TTI der den logischen Kanäle zugeordneten Transportkanäle und Untermengen von Transport-Format-Kombinationen berücksichtigt werden. Eine Warteschlange in der RLC-Schicht enthält Paketeinheiten, die von der RLC-Schicht über die MAC-Schicht zur physikalischen Schicht zu übertragen sind Eine Untermenge der Transport-Format-Kombination ist ein Teil der möglichen Gesamtmenge von Transport-Format-Kombinationen. Untermengen werden verwendet, um die Anzahl der möglichen Transport-Format-Kombinationen zu begrenzen, da die Anzahl der Bits, mit denen der Empfangsseite angezeigt wird, welche Transport-Format-Kombination zur Übertragung verwendet wurde, ebenfalls begrenzt ist.

Ein Transportkanal (bzw. der oder die auf ihn abgebildeten logischen Kanäle) wird (bzw. werden) als im Funkrahmen inaktiv bezeichnet, wenn der Beginn des Funkrahmens nicht mit dem Beginn des Übertragungszeitintervalls des Transportkanals übereinstimmt. Im anderen Fall heißt er (bzw. heißen sie) aktiv. Beim kürzesten Übertragungszeitintervall entsprechend der Länge eines Funkrahmens von beispielsweise 10 ms ist der zugeordnete Transportkanal niemals inaktiv, da ein Transportblock mindestens dieses kürzeste Übertragungszeitintervall zur Übertragung seiner Daten benötigt. Bei längeren Übertragungszeitintervallen (zB. 20 ms) kann ein Transportkanal in diesem Sinne inaktiv sein.

In der MAC-Schicht wird zu Beginn jedes Funkrahmens eine Prozedur ausgeführt, welche die aktiven logischen Kanäle für jeden Funkrahmen entsprechend den oben genannten Kriterien sortiert:

1. Zuerst wird nach der höchsten MAC-Priorität sortiert.
2. Wenn die MAC-Prioritäten gleich sind, wird nach der Belegung der Warteschlangen sortiert, wobei die Warteschlangen mit den meisten Paketeinheiten am Anfang der sortierten Liste stehen.
3. Wenn die Belegung der Warteschlangen und die MAC-Prioritäten gleich sind, wird nach den längsten Übertragungszeitintervallen sortiert.

Wenn die Prozedur eine nach den oben angegebenen Kriterien sortierte Liste mit logischen Kanälen, die Daten zur Übertragung aufweisen, erstellt hat, wird vom Listenanfang mit der höchsten MAC-Priorität an das Übertragungszeitintervall des zugeordneten Transportkanals geprüft, um ein geeignetes Transport-Format zu finden. Dabei ist zu beachten, dass die am Ende gewählte Transport-Format-Kombination auf eine Summendatenrate führt, welche die Gesamtdatenrate, die bei der vorgegebenen Sendeleistung erreichbar ist, nicht überschreitet (Das wird als Datenratenbedingung bezeichnet).

Wenn dieser Transportkanal und folglich alle logischen Kanäle, welche auf den Transport-kanal abgebildet sind, in einem Funkrahmen inaktiv sind, ist für diesen Transportkanal das Transport-Format der für den vorhergehenden Funkrahmen ausgewählten Transport-Format-Kombination zu nehmen. Im anderen Fall, wenn der aktuelle logische Kanal (LC_X) auf einen aktiven Transportkanal (TC_Y) abgebildet wird, bestimmt die MAC-Schicht das beste Transport-Format, welches der Transportkanal TC_Y entsprechend seinen Transport-Format-Mengen für die zu übertragenen Paketeinheiten in der Warteschlange des logischen Kanals LC_X (unter Berücksichtigung aller Paketeinheiten, die dem Transportkanal TC_Y bei der Abfrage höherer priorisierter logischer Kanäle, die ebenfalls auf den zugeordneten Transportkanal TC_Y abgebildet sind, schon zugeteilt wurden) der RLC-Schicht bieten kann. Das beste Transport-Format ist das Transport-Format, welches die höchste Anzahl von echten Nutzdaten-Bits auf dem zugeordneten Transportkanal TC_Y für die Übertragung erlaubt.

Da in der Regel mehrere Transportkanäle, auf die mehrere logische Kanäle abgebildet werden, vorliegen, ist eine Transport-Format-Kombination zu suchen. In einer Rekursions-Prozedur über die logischen Kanäle wird die Menge der möglichen Transport-Format-Kombinationen sukzessive verkleinert. Bei Abfrage des am höchsten priorisierten logischen Kanals ist der Ausgangspunkt die Menge aller Transport-Format-Kombinationen, welche die oben genannte Datenratenbedingung bzgl. der kombinierten Transportkanäle erfüllen, oder eine Untermenge hiervon. Die Transportblöcke des logischen Kanals, die nach Maßgabe des gewählten Transport-Formates übertragen werden können, werden hier als für die Übertragung zugewiesen bezeichnet.

Bei allen Abfragen eines niedriger priorisierten logischen Kanals LC_Z, der auf einen Transportkanal TC_Z abgebildet ist, werden in der bis dahin verkleinerten Menge aller möglichen Transport-Format-Kombinationen diejenigen Transport-Format-Kombinationen ausgewählt, die ein Transport-Format für den Transportkanal TC_Z enthalten, das wenigstens M + N Transportblöcke zu übertragen erlaubt. Dabei ist M die Anzahl von (schon zugewiesenen) Transportblöcken höherer priorisierter logischer Kanäle, die auch auf den Transportkanal TC_Z abgebildet sind N gibt die größtmögliche Anzahl von Transportblöcken an, die vom logischen Kanal LC_Z nach Maßgabe der Transport-Formate für den Transportkanal TC_Z und der in der Warteschlange des logischen Kanals LC_Z wartenden Paketeinheiten, die durch Headerergänzung zu Transportblöcken werden, für die Übertragung zugewiesen werden können: Warten beispielsweise 3 Paketeinheiten, in der Warteschlange des logischen Kanals LC_Z, und die Transportformat-Menge für den Transportkanal TC_Z umfasst nur die Formate 2 und 4, so ergibt sich N = 2.

Die folgenden Beispiele erläutern, warum die Bedingung "mindestens M + N Transportblöcke" (gegenüber der Bedingung "genau M + N Transportblöcke") für die Bestimmung des optimalen Transportformates erforderlich ist.

Da die Größe der Transportblöcke innerhalb einer gegebenen Kanalkonfiguration festgelegt ist, wird eine Transport-Format-Kombination nur durch die Anzahl der Transportblöcke beschrieben, die pro Transportkanal erlaubt sind. Die Transport-Format-Kombination (4, 2, 1) beschreibt beispielsweise die Kombination von drei Transport-Formaten (eine für jeden Transportkanal), wobei:

4 Transportblöcke für den Transportkanal TC1,
2 Transportblöcke für den Transportkanal TC2 und
1 Transportblock für den Transportkanal TC3 erlaubt sind.

Seien nur zwei mögliche Transport-Format-Kombinationen gegeben, zB. die Transport-Format-Kombination TFC1 = (4, 2, 1) und die Transport-Format-Kombination TFC2 = (2, 3, 2), und mindestens zwei logische Kanäle LC1 und LC2, die dem ersten Transportkanal TC1 zugeordnet sind, wobei der logische Kanal LC1 die höchste Priorität und der logische Kanal LC2 geringste Priorität aufweist. Dies beinhaltet, dass alle anderen logischen Kanäle Prioritäten haben, die zwischen diesen beiden extremen Prioritäten liegen. Außerdem sei die aktuelle Belegung der Warteschlange (BO) des logischen Kanals LC1 gleich BO(LC1) = 3 und der des logischen Kanals LC2 gleich BO(LC2) = 1.

Wenn der Transport-Format-Kombinations-Auswahlvorgang nicht mit der Bedingung "mindestens M + N Transportblöcke" sondern "genau M + N Transportblöcke" abläuft und mit dem logischen Kanal LC1 gestartet wird, der die höchste Priorität aufweist, würde das Transport-Format mit nur zwei Blöcken, die für den Transportkanal TC1 erlaubt sind, ausgewählt und mit der Transport-Format-Kombination TFC2 = (2, 3, 2) enden. Das bedeutet, es werden 2 Transportblöcke vom Transportkanal TC1 mit M=0 und N=2 (wobei beide Transportblöcke vom logischen Kanal LC1 und kein Transportblock vom logischen Kanal LC2 stammen, da das Hinzufügen eines Blockes vom logischen Kanal LC2 keine gültige Transport-Format-Kombination ergeben würde), 3 Transportblöcke vom Transportkanal TC2 und 2 Transportblöcke vom Transportkanal TC3 übertragen.

Unter Berücksichtigung der Bedingung "mindestens M + N Transportblöcke" würden Transportformate für den Transportkanal TC1 ausgewählt, die 3 und mehr Transportblöcke zu übertragen erlauben (M=0, N=3). Es können allerdings nur 3 Transportblöcke vom logischen Kanal LC 1 geliefert werden. Im folgenden würde der Auswahlvorgang 2 Transportblöcke von anderen, hier nicht näher beschriebenen logischen Kanälen für den Transportkanal TC2 empfangen und einen Transportblock für den Transportkanal TC3 entsprechend der gewählten Transport-Format-Kombination TFC1 = (4, 2, 1) empfangen. Schließlich kommt der Auswahlvorgang zum letzten logischen Kanal LC2 mit BO =1. Da dem Transportkanal T C1 noch immer lediglich 3 Transportblöcke zugeordnet sind, würde der Auswahlvorgang es erlauben, dass der logische Kanal LC2 einen zusätzlichen Transportblock für den Transportkanal TC1 hinzufügt. Dies würde bedeuten, dass die Transport-Format-Kombination TFC1 eine gültige Transport-Format-Kombination ist, da jetzt 4 Transportblöcke für den Transportkanal TC1 (3 Transportblöcke vom logischen Kanal LC1 und 1 Transportblock vom logischen Kanal LC2) sind, 2 Transportblöcke für den Transportkanal TC2 und ein Transportblock für den Transportkanal TC3 vorliegen. Dies erfüllt vollständig das Auswahlkriterien, so viele Transportblöcke wie möglich von dem logischen Kanal mit der höheren Priorität zu empfangen, wohingegen dieses Auswahlkriterium unter Verwendung der Bedingung "genau M + N Transportblöcke" nicht erfüllt ist.

Die Verwendung der Bedingung "genau M + N Transportblöcke" kann sogar eine Umkehrung der Priorität zwischen dem logischen Kanal LC1 und dem logischen Kanal LC2 verursachen, die demselben Transportkanal zugeordnet sind Zur Erläuterung werden weitere Transport-Format-Kombinationen TFC 3 = (2, 2, 1), TFC4 = (0, 2, 1) und TFC5 = (0, 1, 1) vorausgesetzt. Es wird nun außerdem vorausgesetzt, dass die Belegungen der Warteschlangen BO (LC1) = 1 und BO(LC2) = 2 sind, während die der Warteschlangen BO(LC3) = 2 und BO(LC4) = 1 sind. Mit der Bedingung "genau M + N Transportblöcke" würde die MAC-Schicht feststellen, dass der logische Kanal LC1 keinen Transportblock senden kann, da keine Transport-Format-Kombination (1, ..., ...) mit M = 0 und N = 0 verfügbar ist. Daher würde die Transport-Format-Kombination TFC4 ausgewählt, so dass die höchste Datenrate möglich ist. Die Anzahl der gespeicherten Paketeinheiten und die daraus sich ergebenden Transportblöcke der logischen Kanäle LC3 und LC4 passen genau in diese ausgewählte Transport-Format-Kombination, so dass im Verlaufe des Auswahlvorgangs keine weitere Änderung mehr erfolgen wird. Wenn schließlich der logische Kanal LC2 gewählt wird, kann dieser 2 Transportblöcke zur Verfügung stellen und die ausgewählte Transport-Format-Kombination wird die Transport-Format-Kombination TFC3. Dies hat zur Folge, dass der logische Kanal LC1 mit der höchsten Priorität keinen Transportblock senden kann, während der logische Kanal LC2 mit der geringsten Priorität 2 Transportblöcke senden kann. Folglich werden die vorgegebenen Prioritäten ignoriert. Die Verwendung der Bedingung "mindestens M + N Transportblöcke" würde dagegen dazu führen, dass der logische Kanal LC1 und der logische Kanal LC2 je einen Transportblock senden können, wodurch die vorgegebenen Prioritäten beachtet werden.

Nachdem für einen Funkrahmen eine komplette Transport-Format-Kombination berechnet worden ist, fordert die MAC-Schicht von der RLC-Schicht die Sendung der berechneten Anzahl von Transportblöcken zur MAC-Schicht an. Anschließend werden die erzeugten Transportblock-Mengen (eine Menge für jeden Transportkanal) zur physikalischen Schicht übertragen. Die physikalische Schicht fügt dann die empfangenen Transportblock-Mengen nach Maßgabe der gewählten Transport-Format-Kombination unter Beachtung der Segmentierung von Transportblöcken, wenn das Übertragungszeitintervall mehr als einen Funkrahmen enthält, in einen Funkrahmen ein.

Die oben beschriebene Prozedur zur Auswahl einer optimalen Transport-Format-Kombination für den nächsten Funkrahmen, erstellt zuerst eine sortierte Liste nach drei Kriterien. Wie dargestellt, ist das erste Kriterium die Sortierung der logischen Kanäle nach ihrer MAC-Priorität. Nur wenn einige logische Kanäle die gleiche logische Priorität haben, wird die Größe der Warteschlagen in der RLC-Schicht betrachtet. Das längste Übertragungszeitintervall ist das dritte Kriterium wenn die ersten beiden Parameter gleich sind. Da die Priorität der MAC-Schicht und das Übertragungszeitintervall semi-statische Parameter sind (im allgemeinen kann der Parameter nur durch eine Transportkanal-Rekonfiguration geändert werden), aber die Größe der Warteschlangen von Funkrahmen zu Funkrahmen variiert, kann die oben genannte Sortierung mit demselben Sortierergebnis erfindungsgemäß nach folgendem Schema ausgeführt werden:

Nach einer Transportkanal-Rekonfigurierung, die z.B. beinhalten kann, dass ein weiterer Transportkanal hinzugenommen wird oder ein vorhandener Transportkanal entfernt wird, werden die logischen Kanäle einmalig

1. nach ihrer MAC-Priorität (MLP) sortiert,

2. und für alle logischen Kanäle mit gleicher MAC-Priorität (MLP) nach ihrem Übertragungszeitintervall (TTI) in absteigender Länge sortiert.

Zu Beginn jedes Funkrahmens werden die dann aktiven logischen Kanäle derselben MAC-Priorität in der geordneten Liste dann nur noch nach den Belegung der Warteschlangen (längste Warteschlange zuerst) umsortiert, wobei die Länge des Übertragungszeitintervalls (TTI) dann ignoriert wird. Gemäß dieser Sortierung fragt die MAC-Schicht dann die RLC-Puffer der einzelnen logischen Kanäle nach der Anzahl zu übertragender Transportblöcke ab und wählt das günstigste vorhandene Transport Format (d.h. dasjenige, das die höchste Datenrate erlaubt) aus. Die so definierte Sortierung spart somit zu Beginn jedes Funkrahmens zwei Sortierungsschritte ein.

Ein Beispiel für dieses Sortierschema zeigen die Fig. 3 bis 5. Fig. 3 stellt eine unsortierte Liste mit gleichen Prioritäten der MAC-Schicht dar, wobei ID eine Identfikationsbezeichnung für die logischen Kanäle, BO die Belegung der Warteschlange von Paketeinheiten, die über einen zugeordneten logischen Kanal übertragen werden sollen, und TTI das Übertragungszeitintervall des zugeordneten Transportkanals ist. Die unsortierte Liste weist vier logische Kanäle mit ID = a, b, c und d auf. Dem logischen Kanal mit der ID = a ist BO = 7 und TTI = 10, dem logischen Kanal mit der ID =b ist BO = 3 und TTI=40, dem logischen Kanal mit der ID = c ist BO = 3 und TTI = 20 und dem logischen Kanal mit der ID = d ist BO = 7 und TTI = 40 zugeordnet. Die Fig. 4 zeigt die Liste, die entsprechend den längsten Ubertragungszeitintervallen TTI sortiert ist. Anschließend werden die logischen Kanäle nach der Größe der Warteschlangen BO sortiert, wobei nicht die Übertragungszeitintervalle TTI betrachtet werden. Diese sortierte Liste zeigt Fig 5.

Im folgenden wird der Vorgang zur Auswahl der Transport-Format-Kombination in der MAC-Schicht formal beschrieben.

Mit 1, ..., P1 werden die logischen Kanäle bezeichnet, welche zu Beginn des betrachteten Funkrahmens aktiv sind und nach der oben angegebenen Prozedur sortiert wurden. Dabei hat der logische Kanal mit der laufenden Nummer 1 die höchste Priorität P und der logische Kanal mit der laufenden Nummer P1 die niedrigste Priorität P.

S ist die Menge aller Transport-Format-Kombinationen, die auf Datenraten führen, die bei der maximalen Sendeleistung des betrachteten Terminals noch erreicht werden können, oder eine Untermenge davon.

Die Prozedur hat folgenden Ablauf für die im gegenwärtigen Funkrahmen aktiven logischen Kanäle:

Starte mit der laufenden Nummer P:=1

1. Setze die Menge S0 gleich der Menge S.

2. Wenn S0 eine einzige Transport-Format-Kombination enthält, wird diese Transport-Format-Kombination ausgewählt und der Vorgang endet. Andernfalls fahre fort mit Schritt 3.

3. Setze nun die Menge S gleich der Menge aller Transport-Format-Kombinationen in S0, welche (unter Berücksichtigung der Paketeinheiten in den Warteschlangen von schon inspizierten logischen Kanälen, die auf denselben Transport-Kanal abgebildet sind) die höchste Anzahl von verfügbaren Datenbits des logischen Kanals mit der laufenden Nummer P oder mehr als diese höchste Anzahl zu übertragen erlauben.

4. P:=P+1

5. Wenn P>P1 ist:

Es wird die Transport-Format-Kombination in S0 ausgewählt, welche unter Berücksichtigung der Anzahl von Transportblöcken, die den im gegenwärtigen Funkrahmen inaktiven Transportkanälen schon für die Übertragung zugewiesen worden sind, die niedrigste Anzahl von Nutz-Datenbits zu übertragen erlaubt. Das kann bedeuten, dass die gegenwärtig aktiven logischen Kanäle Füll-Paketeinheiten (d.h. diese Paketeinheiten entstehen nicht aus echten Nutzdaten) erzeugen müssen, wenn die gefundenen Transport-Format-Kombinationen nur mehr Transportblöcke als in der Warteschlange vorhandene Paketeinheinten zu übertragen erlauben. Damit ist der Vorgang beendet.

Sonst: Zurück zu Schritt 1.

Nachfolgendes Beispiel illustriert die Vorgehensweise:

Gegeben seien vier logische Kanäle LC1, LC2, LC3 und LC4 (mit fallender MAC-Priorität MLP). Die logischen Kanäle LC1 und LC3 seien auf denselbenTransportkanal TC1 (Übertragungszeitintervall TTI1 = 10 ms) abgebildet, während der logische Kanal LC2 auf TC 2 (Übertragungszetintervall TTI2 = 20 ms) und der logische Kanal LC4 auf TC3 (Übertragungszeitintervall TTI3 = 40 ms) abgebildet werden. Die Transport-Formate für einen Transport-Kanal seien gegeben als Anzahl von Bit-Blöcken einer vorgegebenen Länge. Die Bit-Blöcke verschiedener Transportkanäle können unterschiedliche Länge haben.

Die Menge TF1 von Transport-Formaten vom Transportkanal TC1 sei TF1 = {0, 1, 2, 3, 4}, die Menge TF2 der Transport-Formate vom Transportkanal TC2 sei TF2 = {0, 1, 2} und diejenige vom Transportkanal TC3 sei TF3 = {0, 1}. Die resultierende Produktmenge stellt die Menge aller möglichen Transport-Format-Kombinationen dar.

Sei weiterhin als Menge der möglichen Transport-Format-Kombinationen nur die folgende Untermenge der Produktmenge vorgegeben

$$TFC\_START = \{(0,0,0), (1,0,0), (3,0,0), (4,0,0),$$
$$(0,0,1), (1,0,1), (3,0,1), (4,0,1),$$

$$(0,1,0), (1,1,0), (3,1,0), (4,1,0),$$
$$(0,1,1), (1,1,1), (3,1,1), (4,1,1),$$
$$(0,2,0), (1,2,0), (3,2,0), (4,2,0),$$
$$(0,2,1), (1,2,1), (3,2,1), (4,2,1)\},$$

in der die Kombinationen (2,0,0), (2,0,1), (2,1,0), (2,1,1), (2,2,0) und (2,2,1) fehlen. Es wird angenommen, dass die in TFC_START enthaltenen Format-Kombinationen auf Datenraten führen, die bei der maximalen Datenrate unterstützt werden können.

Sei der Funkrahmen RF1 ein Funkrahmen, zu dem die drei verschiedenen Übertragungszeitintervalle TTI1, TTI2 und TTI3 beginnen. In diesem Funkrahmen sind alle drei Transport-Kanäle aktiv. Die Belegungen BO der Warteschlangen der zugehörigen logischen Kanäle sei zu Beginn dieses Funkrahmen wie folgt:

$$BO(LC1) = 2$$

$$BO(LC2) = 1$$

$$BO(LC3) = 1$$

$$BO(LC4) = 1$$

Die Prozedur fragt nun die logischen Kanäle der Reihe nach ab. Eine Inspektion des logischen Kanals LC1 liefert als verkleinerte Menge der möglichen Transport-Format-Kombinationen:

$$\{(1,0,0), (3,0,0), (4,0,0),$$
$$(1,0,1), (3,0,1), (4,0,1),$$
$$(1,1,0), (3,1,0), (4,1,0),$$
$$(1,1,1), (3,1,1), (4,1,1),$$
$$(1,2,0), (3,2,0), (4,2,0),$$
$$(1,2,1), (3,2,1), (4,2,1)\},$$

wobei z.B. die Format-Kombinationen (1,0,0), (1,0,1), (1,1,0), (1,1,1), (1,2,0), (1,2,1) genau die höchste Anzahl von verfügbaren Datenbits des logischen Kanals LC1 zu übertragen erlauben (es sind zwar 2 Transportblöcke verfügbar, jedoch gibt es keine Format-Kombination, die 2 Transportblöcke auf TC1 zu übertragen erlaubt), während die übrigen Format-Kombinationen mehr als diese höchste Anzahl von verfügbaren Datenbits zu übertragen erlauben.

Eine Inspektion des logischen Kanals LC2 liefert als weiter verkleinerte Menge der möglichen Transport-Format-Kombinationen;

$$\{(1,1,0), (3,1,0), (4,1,0),$$
$$(1,1,1), (3,1,1), (4,1,1),$$
$$(1,2,0), (3,2,0), (4,2,0),$$
$$(1,2,1), (3,2,1), (4,2,1)\},$$

da auf den Transportkanal TC2 genau 1 Transportblock oder mehr als 1 Transportblock, nämlich 2 Transportblöcke übertragen werden können.

Eine Inspektion des logischen Kanals LC3 liefert als weiter verkleinerte Menge der möglichen Transport-Format-Kombinationen:

$$\{(3,1,0), (4,1,0),$$
$$(3,1,1), (4,1,1),$$
$$(3,2,0), (4,2,0),$$
$$(3,2,1), (4,2,1)\},$$

da mit den zwei Transportblöcken des logischen Kanals LC1 der eine Transportblock des logischen Kanals LC3 oder mehr als dieser Transportblock übertragen werden kann.

Eine Inspektion des logischen Kanals LC4 liefert schließlich die verkleinerte Menge:

$$\{(3,1,1), (4,1,1),$$
$$(3,2,1), (4,2,1)\}$$

Die Transport-Format-Kombination (3,1,1) bedingt die niedrigste Nutzdatenrate dieser vier Kombinationen und erfüllt somit das Abbruchkriterium.

Im nächsten Funkrahmen RF2 ist nur der Transportkanal TC1 aktiv, dh es sind nur die logischen Kanäle LC1 und LC3 aktiv und zu inspizieren. Seien die Warteschlangsnbdegungen in diesem Fall gegeben durch

$$BO(LC1)=2$$

$$BO(LC3)=0$$

Eine Inspektion des logischen Kanals LC1 liefert die verkleinerte Menge der möglichen Transport-Format-Kombinationen aus TFC_START:

$$\{(1,0,0), (3,0,0), (4,0,0),$$
$$(1,0,1), (3,0,1), (4,0,1),$$
$$(1,1,0), (3,1,0), (4,1,0),$$
$$(1,1,1), (3,1,1), (4,1,1),$$
$$(1,2,0), (3,2,0), (4,2,0),$$
$$(1,2,1), (3,2,1), (4,2,1)\},$$

Inspektion des logischen Kanals LC3 liefert dieselbe Menge der möglichen Transport-Format-Kombmationen;

$$\{(1,0,0), (3,0,0), (4,0,0),$$
$$(1,0,1), (3,0,1), (4,0,1),$$
$$(1,1,0), (3,1,0), (4,1,0),$$
$$(1,1,1), (3,1,1), (4,1,1),$$
$$(1,2,0), (3,2,0), (4,2,0),$$
$$(1,2,1), (3,2,1), (4,2,1)\},$$

Unter Berücksichtigung des im vorangegangenen Funkrahmen RF1 für die Übertragung zugeteilten je einen Transportblocks für TC2 und TC3 ergibt die Abbruchbedingung die Format-Kombination (1, 1, 1). Nur sie erlaubt die Übertragung (der Segmente) der schon für die Transportkanäle TC2 und TC3 zugewiesenen Transportblöcke bei gleichzeitig niedrigster resultierender Datenrate aller sonst in Frage kommender Transport-Format-Kombinationen. Wäre die Format-Kombination (1, 1, 1) in TFC_START nicht enthalten, so müsste stattdessen die Transport-Format-Kombination (3, 1,1) gewählt werden, so dass der logische Kanals LC1 beide Paketeinheiten übertragen kann, und der logische Kanal LC1 (oder LC3) eine Füll-Paketeinheit erzeugen müsste, die keinerlei Nutzdaten trägt.

**Patentansprüche**

**1.** Drahtloses Netzwerk mit einer Funknetzwerk-Steuerung (1) und mehreren zugeordneten Terminals (2-9),

- die jeweils zur Übertragung von aus Paketeinheiten eines logischen Kanals (13) gebildeten Transportblöcken auf einem Transportkanal (12) vorgesehen sind, dem ein Übertragungszeitintervall aus wenigstens einem Funkrahmen zugeordnet ist und der aktiv ist, wenn der Beginn seines Übertragungszeitintervalls und eines Funkrahmens übereinstimmen,
- die zu Beginn eines jeden Funkrahmens die aktiven logischen Kanäle (13) zwischen einer Radio Link Control Schicht, im Folgenden RLC-Schicht, und der Medium Access Control-Schicht, im Folgenden MAC- Schicht, nach den höchsten Prioritäten sortieren,
- **dadurch gekennzeichnet, dass** die Funknetzwerk-Steuerung und die Terminals für jeden der bestehenden logischen Kanäle (13) nacheinander, beginnend mit dem logischen Kanal mit der höchsten Priorität, alle diejenigen Transport-Format-Kombinationen auswählen, welche mindestens M+N Transportblöcke zu übertragen erlauben, wobei M die Anzahl von bereits zugewiesenen Transportblöcken höher priorisierter logischer Kanäle ist, die auch auf den zugehörigen Transportkanal abgebildet sind und N die höchste Anzahl der verfügbaren Paketeinheiten des jeweils betrachteten logischen Kanals ist, die dem zugehörigen Transportkanal zuweisbar sind, ohne dass Transportblöcke des zugehörigen Transportkanals ungenutzt bleiben, wobei eine Transport-Format-Kombination die zur Übertragung vorgesehenen Transportblöcke auf jedem Transportkanal (12) angibt, und

die zur Selektion derjenigen Transport-Format-Kombination aus der reduzierten Anzahl der Transport-Format-Kombinationen vorgesehen sind, welche die niedrigste Anzahl von Transportblöcken enthält, wobei keine Änderung der in einem vorhergehenden Funkrahmen erfolgten Zuweisung der inaktiven Transportkanälevorgesehen ist.

**2.** Drahtloses Netzwerk nach Anspruch 1,
**dadurch gekennzeichnet,**
**dass** eine unterschiedliche Priorität aufweisende logische Kanäle auf genau einen Transportkanal abgebildet sind.

**3.** Drahtloses Netzwerk nach Anspruch 2,
**dadurch gekennzeichnet,**
**dass** die Funknetzwerk-Steuerung oder ein Terminal nach einer Transportkanal-Rekanfigurierung die logischen Kanäle nach den Prioritäten der logischen Kanäle und bei gleicher Priorität der logischen Kanäle nach ihrem Übertragungszeitintervall in absteigender Länge sortiert, und dass die Funknetzwerk-Steuerung oder ein Terminal zu Beginn jedes Funkrahmens die aktiven logischen Kanäle derselben Priorität nach der Belegung der Warteschlange umsortiert.

**4.** Drahtloses Netzwerk nach Anspruch 1,
**dadurch gekennzeichnet,**
**dass** die MAC-Schicht einer Funknetzwerk-Steuerung oder eines Terminals zur Auswahl einer Transport-Format-Kombination vorgesehen ist.

**5.** Drahtloses Netzwerk nach Anspruch 4,
**dadurch gekennzeichnet,**
**dass** die RLC-Schicht der Funknetzwerk-Steuerung oder eines Terminals zur Speicherung von zur Übertragung vorgesehenen Paketeinheiten und die MAC-Schicht zur Bildung eines Transportblocks aus einer über einen logischen Kanal gelieferten Paketeinheit vorgesehen ist.

**6.** Funknetzwerk-Steuerung eines drahtlosen Netzwerks mit mehreren zugeordneten Terminals (2-9), wobei die Funknetzwerk-Steuerung (1)

- jeweils zur Übertragung von aus Paketeinheiten eines logischen Kanals gebildeten Transportblöcken auf einem Transportkanal vorgesehen ist, dem ein Übertragungszeitintervall aus wenigstens einem Funkrahmen zugeordnet ist und der aktiv ist, wenn der Beginn seines Übertragungszeitintervalls und eines Funkrahmens übereinstimmen, und
- eine Medium Access Control-Schicht, im Folgenden MAC-Schicht, zu Beginn eines jeden Funkrahmens die aktiven logischen Kanäle (13) zwischen einer Radio Link Control Schicht, im Folgenden RLC-Schicht, und der MAC-Schicht nach den höchsten Prioritäten sortiert,
- **dadurch gekennzeichnet, dass** die Funknetzwerk-Steuerung (1) nacheinander für jeden logischen Kanal (13), beginnend mit dem logischen Kanal mit der höchsten Priorität, aus einer vorgegebenen Menge von Transport-Format-Kombinationen diejenigen Transport-Format-Kombinationen auswählt, welche mindestens M+N Transportblöcke zu übertragen erlauben, wobei M die Anzahl von bereits zugewiesenen Transportblöcken höher priorisierter logischer Kanäle ist, die auch auf den zugehörigen Transportkanal abgebildet sind und N die höchste Anzahl der verfügbaren Paketeinheiten des jeweils betrachteten logischen Kanals ist, die dem zugehörigen Transportkanal zuweisbar sind, ohne dass Transportblöcke des zugehörigen Transportkanals ungenutzt bleiben, wobei eine Transport-Format-Kombination die zur Übertragung vorgesehenen Transportblöcke auf jedem Transportkanal (12) angibt,

und

die Funknetzwerk-Steuerung (1) zur Selektion derjenigen Transport-Format-Kombination aus der reduzierten Anzahl der Transport-Format-Kombinationen vorgesehen ist, welche die niedrigste Anzahl von Transportblöcken enthält, wobei keine Änderung der in einem vorhergehenden Funkrahmen erfolgten Zuweisung der inaktiven Transportkanäle vorgesehen ist.

**7.** Terminal (2-9) wobei eines drahtlosen Netzwerks mit einer Funlmetzwerk-Steuerung (1),

- das Terminal (2-9) jeweils zur Übertragung von aus Paketeinheiten eines logischen Kanals (13) gebildeten Transportblöcken auf einem Transportkanal (12) vorgesehen ist, dem ein Übertragungszeitintervall aus wenigstens einem Funkrahmen zugeordnet ist und der aktiv ist, wenn der Beginn seines Übertragungszeitintervalls und eines Funkrahmens übereinstimmen,

- eine Medium Access Control-Schicht, im Folgenden MAC-Schicht, zu Beginn eines jeden Funkrahmens die aktiven logischen Kanäle (13) zwischen einer Radio Link Control Schicht, im Folgenden RLC-Schicht, und der MAC-Schicht nach den höchsten Prioritäten sortiert,

- **dadurch gekennzeichnet dass** das Terminal nacheinander für jeden logischen Kanal (13), beginnend mit dem logischen Kanal mit der höchsten Priorität, aus einer vorgegebenen Menge von Transport-Format-Kombinationen diejenigen Transport-Format-Kombinationen auswählt, welche mindestens M+N Transportblöcke zu übertragen erlauben, wobei M die Anzahl von bereits zugewiesenen Transportblöcken höher priorisierter logischer Kanäle ist, die auch auf den zugehörigen Transportkanal abgebildet sind und N die höchste Anzahl der verfügbaren Paketeinheiten des jeweils betrachteten logischen Kanals ist, die dem zugehörigen Transport-kanal zuweisbar sind, ohne dass Transportblöcke des zugehörigen Transportkanals ungenutzt bleiben, wobei eine Transport-Format-Kombination die zur Übertragung vorgesehenen Transportblöcke auf jedem Transport-kanal (12) angibt,

und

dass das Terminal (2-9) zur Selektion derjenigen Transport-Format-Kombination aus der reduzierten Anzahl der Transport-Format-Kombinationen vorgesehen ist, welche die niedrigste Anzahl von Transportblöcken enthält, wobei keine Änderung der in einem vorhergehenden Funkrahmen erfolgten Zuweisung der inaktiven Transportkanäle vorgesehen ist.

**Claims**

1. A wireless network comprising a radio network controller (1) and a plurality of assigned terminals (2-9),

   - which are each provided for transmitting transport blocks formed by packet data units of a logic channel (13) over a transport channel (12) to which a transmission time interval is assigned that comprises at least one radio frame and which transport channel is active when the beginning of its transmission time interval and that of a radio frame correspond,
   - which at the beginning of each radio frame sort the active logic channels (13) between a radio link control layer, called RLC layer in the following, and the medium access control layer, called MAC layer in the following according to the highest priorities,
   - **characterized in that** the radio network controller and the terminals consecutively select for each of the existing logic channels (13), starting with the logic channel that has the highest priority, all the transport format combinations that can transport at least M+N transport blocks, where M is the number of already assigned transport blocks of higher-priority logic channels which are also mapped onto the associated transport channel and N is the highest number of available packet data units of the respective considered logic channel, which packet data units can be assigned to the associated transport channel without transport blocks of the associated transport channel remaining unused, where a transport format combination indicates the transport blocks to be transmitted on each transport channel (12), and
   - which are provided for selecting the transport format combination from the reduced number of transport format combinations that contains the lowest number of transport blocks, while no change is provided in the assignment of the inactive transport channels effected in a previous radio frame.

2. A wireless network as claimed in claim 1, **characterized in that** logic channels having different priorities are mapped onto exactly one transport channel.

3. A wireless network as claimed in claim 2, **characterized in that** the radio network controller or a terminal after a reconfiguration of the transport channel sorts the logic channels according to the priorities of the logic channels and, in case of equal priority of the logic channels, according to their transmission time interval in descending order of length, and that at the beginning of each radio frame the radio network controller or a terminal re-sorts the active logic channels that have equal priority according to the buffer occupancy.

4. A wireless network as claimed in claim 1, **characterized in that** the MAC layer of a radio network controller or of a terminal is provided for selecting a transport format combination.

5. A wireless network as claimed in claim 4, **characterized in that** the RLC layer of the radio network controller or of a terminal is provided for storing packet data units provided for transmission and the MAC layer is provided for forming a transport block from a packet data unit delivered over a logic channel.

6. A radio network controller of a wireless network comprising a plurality of assigned terminals (2-9), in which the radio network controller (1),

- is provided for transmitting transport blocks formed by packet data units of a logic channel over a transport channel to which a transmission time interval is assigned that comprises at least one radio frame and which transport channel is active when the beginning of its transmission time interval and that of a radio frame correspond, and
- a medium access control layer, called MAC layer in the following, sorts at the beginning of each radio frame the active logic channels (13) between a radio link control layer, called RLC layer in the following, and the MAC layer according to the highest priority,
- **characterized in that** the radio network controller (1) consecutively selects for each logic channel (13), starting with the logic channel that has the highest priority, from a predefined number of transport format combinations the transport format combinations that can transport at least M+N transport blocks, where M is the number of already assigned transport blocks of higher-priority logic channels which are also mapped onto the associated transport channel and N is the highest number of available packet data units of the respective considered logic channel, which packet data units can be assigned to the associated transport channel without transport blocks of the associated transport channel remaining unused, where a transport format combination indicates the transport blocks to be transmitted on each transport channel (12), and
- the radio network controller (1) is provided for selecting the transport format combination from the reduced number of transport format combinations that contains the lowest number of transport blocks, while no change is provided in the assignment of the inactive transport channels effected in a previous radio frame.

7. A terminal (2-9) of a wireless network comprising a radio network controller (1), in which

- the terminal (2-9) is provided for transmitting transport blocks formed by packet data units of a logic channel (13) over a transport channel (12) to which a transmission time interval is assigned that comprises at least one radio frame and which transport channel is active when the beginning of its transmission time interval and that of a radio frame correspond,
- a medium access control layer, called MAC layer in the following, sorts at the beginning of each radio frame the active logic channels (13) between a radio link control layer, called RLC layer in the following, and the MAC layer according to the highest priority,
- **characterized in that** the terminal consecutively selects for each logic channel (13), starting with the logic channel that has the highest priority, from a predefined number of transport format combinations the transport format combination that can transport at least M+N transport blocks, where M is the number of already assigned transport blocks of higher-priority logic channels which are also mapped onto the associated transport channel and N is the highest number of available packet data units of the respective considered logic channel, which packet data units can be assigned to the associated transport channel without transport blocks of the associated transport channel remaining unused, where a transport format combination indicates the transport blocks to be transmitted on each transport channel(12),and
- the terminal (2-9) is provided for selecting the transport format combination from the reduced number of transport format combinations that contains the lowest number of transport blocks, while no change is provided in the assignment of the inactive transport channels effected in a previous radio frame.


**Revendications**

1. Réseau sans fil comprenant un contrôleur de réseau radio (1) et plusieurs terminaux associés (2-9),

- qui sont chacun prévus pour la transmission de blocs de transport, formés à partir d'unités de paquet d'un canal logique (13), sur un canal de transport (12), auquel est associé un intervalle de temps de transmission d'au moins une trame radio et qui est actif lorsque le début de son intervalle de temps de transmission et le début d'une trame radio correspondent,
- qui, au début de chaque trame radio, trient, par ordre décroissant de priorité, les canaux logiques actifs (13) entre une couche Radio Link Control, ci-après couche RLC, et la couche Medium Access Control, ci-après couche MAC,
- **caractérisés en ce que** le contrôleur de réseau radio et les terminaux, pour chacun des canaux logiques existants (13), l'un après l'autre, en commençant par le canal logique de plus haute priorité, sélectionnent toutes les combinaisons de formats de transport qui permettent la transmission d'au moins M+N blocs de transport, où M est le nombre de blocs de transport, déjà attribués, appartenant à des canaux logiques de priorité plus élevée, qui sont aussi établis sur le canal de transport y afférent, et N est le plus grand nombre d'unités de paquet disponibles du canal logique respectif considéré, qui sont attribuables au canal de transport y afférent, sans que des blocs de transport du canal de transport y afférent ne restent inutilisés, où une combinaison de formats de transport indique les blocs de transport qu'il est prévu de transmettre sur chaque canal de transport (12), et

qui sont prévus pour la sélection de la combinaison de formats de transport, appartenant au nombre réduit de combinaisons de formats de transport, qui contient le plus petit nombre de blocs de transport, où aucune modification de l'attribution des canaux de transport inactifs, effectuée dans une trame radio précédente, n'est prévue.

2. Réseau sans fil selon la revendication 1,
**caractérisé en ce que**
des canaux logiques présentant une priorité différente sont établis sur strictement un canal de transport.

3. Réseau sans fil selon la revendication 2,
**caractérisé en ce que** le contrôleur de réseau radio ou un terminal, après une reconfiguration de canal de transport, trie les canaux logiques en fonction des priorités des canaux logiques et, en cas de canaux logiques de priorités identiques, par ordre décroissant de la longueur de leur intervalle de temps de transmission, et **en ce que** le contrôleur de réseau radio ou un terminal, au début de chaque trame radio, retrie les canaux logiques actifs de même priorité en fonction de l'occupation de la file d'attente.

4. Réseau sans fil selon la revendication 1,
**caractérisé en ce que** la couche MAC d'un contrôleur de réseau radio ou d'un terminal est prévue pour la sélection d'une combinaison de formats de transport.

5. Réseau sans fil selon la revendication 4,
**caractérisé en ce que** la couche RLC du contrôleur de réseau radio ou d'un terminal est prévue pour la mémorisation d'unités de paquet prévues pour la transmission et la couche MAC, pour la formation d'un bloc de transport à partir d'une unité de paquet fournie par un canal logique.

6. Contrôleur de réseau radio d'un réseau sans fil comprenant plusieurs terminaux associés (2-9), où le contrôleur de réseau radio (1)

- est prévu pour la transmission de blocs de transport, formés à partir d'unités de paquet d'un canal logique, sur un canal de transport, auquel est associé un intervalle de temps de transmission d'au moins une trame radio et qui est actif lorsque le début de son intervalle de temps de transmission et le début d'une trame radio correspondent, et où
- une couche Medium Access Control, ci-après couche MAC, au début de chaque trame radio, trie, par ordre décroissant de priorité, les canaux logiques actifs (13) entre une couche Radio Link Control, ci-après la couche RLC, et la couche MAC,
- **caractérisé en ce que** le contrôleur de réseau radio (1), pour chaque canal logique (13), l'un après l'autre, en commençant par le canal logique de plus haute priorité, sélectionne, dans un ensemble prédéfini de combinaisons de formats de transport, les combinaisons de formats de transport qui permettent la transmission d'au moins M+N blocs de transport, où M est le nombre de blocs de transport, déjà attribués, appartenant à des canaux logiques de priorité plus élevée, qui sont aussi établis sur le canal de transport y afférent, et N est le plus grand nombre d'unités de paquet disponibles du canal logique respectif considéré, qui sont attribuables au canal de transport y afférent, sans que des blocs de transport du canal de transport y afférent ne restent inutilisés, où une combinaison de formats de transport indique les blocs de transport qu'il est prévu de transmettre sur chaque canal de transport (12),
et où
le contrôleur de réseau radio (1) est prévu pour la sélection de la combinaison de formats de transport, appartenant au nombre réduit de combinaisons de formats de transport, qui contient le plus petit nombre de blocs de transport, où aucune modification de l'attribution des canaux de transport inactifs, effectuée dans une trame radio précédente, n'est prévue.

7. Terminal (2-9) d'un réseau sans fil comprenant un contrôleur de réseau radio (1), où

- le terminal (2-9) est chaque fois prévu pour la transmission de blocs de transport, formés à partir d'unités de paquet d'un canal logique (13), sur un canal de transport (12), auquel est associé un intervalle de temps de transmission d'au moins une trame radio et qui est actif lorsque le début de son intervalle de temps de transmission et le début d'une trame radio correspondent,

- où une couche Medium Access Control, ci-après couche MAC, au début de chaque trame radio, trie, par ordre décroissant de priorité, les canaux logiques actifs (13) entre une couche Radio Link Control, ci-après couche RLC, et la couche MAC,

- **caractérisé en ce que** le terminal, pour chaque canal logique (13), l'un après l'autre, en commençant par le canal logique de plus haute priorité, sélectionne, dans un ensemble prédéfini de combinaisons de formats de transport, les combinaisons de formats de transport qui permettent la transmission d'au moins M+N blocs de transport, où M est le nombre de blocs de transport, déjà attribués, appartenant à des canaux logiques de priorité plus élevée, qui sont aussi établis sur le canal de transport y afférent, et N est le plus grand nombre d'unités de paquet disponibles du canal logique respectif considéré, qui sont attribuables au canal de transport y afférent, sans que des blocs de transport du canal de transport y afférent ne restent inutilisés, où une combinaison de formats de transport indique les blocs de transport qu'il est prévu de transmettre sur chaque canal de transport (12),

et

**en ce que** le terminal (2-9) est prévu pour la sélection de la combinaison de formats de transport, appartenant au nombre réduit de combinaisons de formats de transport, qui contient le plus petit nombre de blocs de transport, où aucune modification de l'attribution des canaux de transport inactifs, effectuée dans une trame radio précédente, n'est prévue.

FIG. 1

FIG. 2

| ID | BO | TTI |
|----|----|-----|
| a  | 7  | 10  |
| b  | 3  | 40  |
| c  | 3  | 20  |
| d  | 7  | 40  |

## FIG. 3

| ID | BO | TTI |
|----|----|-----|
| b  | 3  | 40  |
| d  | 7  | 40  |
| c  | 3  | 20  |
| a  | 7  | 10  |

## FIG. 4

| ID | BO | TTI |
|----|----|-----|
| d  | 7  | 40  |
| a  | 7  | 10  |
| b  | 3  | 40  |
| c  | 3  | 20  |

## FIG. 5